# EUROPEAN PATENT SPECIFICATION

(11) **EP 2 123 392 B1**
(45) Date of publication and mention of the grant of the patent: **09.11.2011**
(21) Application number: 09425197.2
(22) Date of filing: 21.05.2009
(51) Int. Cl.: B23Q 1/54, B23Q 39/02

(54) **Rotary multi-spindle operating head and machine tool comprising said head**
Drehbarer Mehrspindel-Betriebskopf und Werkzeugmaschine damit
Tête d'usinage roative avec plusieurs broches et machine-outil la comprenant

(30) Priority: 23.05.2008 IT FI20080105; 23.05.2008 IT FI20080106
(43) Date of publication of application: 25.11.2009
(73) Proprietor: Paolino Bacci S.r.l., 56021 Cascina, (PI) (IT)
(72) Inventor: Ruggieri, Alberto, 56025 Pontedera, Pisa (IT)
(74) Representative: Mannucci, Michele

(56) References cited:
- DE-A1- 2 526 584
- DE-A1- 19 528 404
- FR-A- 2 655 896

## Description

### Technical field

The present invention relates to improvements to machine tools or machining centers. More in particular, the present invention relates to improvements to machine tools for machining wood or similar materials. According to one aspect, the present invention relates to improvements to a rotary or bi-rotary multi-spindle head for machine tools or working centers.

### State of the Art

For machining several materials, especially and in particular wood, numerically controlled machine tools are used, called also working centers, comprising at least one operating head provided with one or more tool spindles. The operating heads can be provided with a rotation or oscillation movement around a numerically controlled axis or around two numerically controlled axes, typically orthogonal to each other. In the second case they are called bi-rotary operating heads.

These heads have usually a number of spindles variable from one to four and more. Typically, the spindles are arranged with their axes of rotation in a preset unchangeable configuration. In some cases, the spindles are arranged with their axes of rotation all oriented at 90° one relative to the other, i.e. all substantially orthogonal to each other. EP-A-1,452,269 describes a multi-spindle head comprising two slides, on each of which a group of spindles is arranged. Each group of spindles rotates around a rotation axis, substantially orthogonal to the numerically controlled rotation axis of the head. This known operating head is particularly versatile, but it has a complex, bulky and expensive structure.

Rotary or bi-rotary multi-spindle heads of this type are used to perform a series of machining operations on one or more pieces with different tools, each tool being mounted on a respective spindle. In some cases, the machine tools are provided with tool changing devices that, during the working cycle of a piece, can replace one or more of the tools supported by the spindles of the multi-spindle head, in order to perform on the same piece subsequent machining operations with a number of tools greater than the number of spindles provided on the operating head.

These operating heads and the respective machine tools or working centers which use them are particularly versatile but not free from limits and constraints as regards the machining which can be performed.

DE-A-2526584 discloses a machine tool including an annular base on which a plurality of spindles are arranged and can be angularly adjusted in order to machine a workpiece arranged substantially at the centre of said annular base.

DE-19528404 discloses a machine tool with two workpiece holders symmetrically arranged around an operating multi-spindle head. The head is provided with a revolver-arrangement of spindles and rotates around an axis of rotation to angularly adjust the tools with respect to the workpiece supported by the workpiece holders.

### Summary of the Invention

According to one aspect, the invention relates to an improvement of a multi-spindle head, in particular but not exclusively a rotary or bi-rotary head, i,e. a head provided with one or two numerically controlled axes of rotation or oscillation, around which the head rotates so as to perform different machining operations on a workpiece.

A head according to the invention is defined in claim 1. The dependent claims relate to further improvements of the head according to the invention.

According to another aspect, the invention relates to a machine tool or working center that comprises one or more operating heads of the above mentioned type.

Substantially, the multi-spindle operating head according to the present invention comprises the features of appended claim 1. The adjustment movement for adjusting the spindle angularly can be advantageously a manual movement, which allows to obtain particularly compact and cost-effective operating heads. However, it is also possible to use an actuator to perform the movement of angular adjustment, for example a piston-cylinder actuator, or an electric motor, however preferably not a numerically controlled one, but rather controlled by means of two abutments defining two alternative working positions. This makes the head particularly versatile, and, furthermore, compact and cost-effective, By rotating the spindle into one or the other of the possible angular positions, it is possible to arrange the rotation axes mutually parallel or orthogonal, according to the type of machining to be performed and to the tools to be mounted. As it will be described in greater detail hereunder, in some embodiments the operating head can be designed so as to perform two sequential machining operations by means of two different tools that work in succession along the same path, for example two machining operations, one for roughing and one for finishing the edge of a piece. In other configurations, the tools and the spindles can be arranged in such a way as to machine two identical pieces simultaneously.

In one embodiment, the head can have two spindles, one of which is fixed and the other can be adjusted angularly. Preferably, on the body of the head three spindle will be provided, at least one of which can be adjusted angularly. However, the head will comprise preferably four spindles, which can be adjusted so as to have mutually perpendicular rotation axes, or in any case axes oriented at 90° one relative to the other, or mutually parallel and flanking each other in pair.

According to a further aspect, the present invention relates to a machine tool comprising at least one multi-spindle operating head as defined above. The machine tool can be for example a machine tool with a fixed or movable column, or a fixed gantry (portal-type) machine.

Generally and preferably the spindles are electrospindles, i.e. spindles, each of which is provided with a respective motor for rotating the axis or shaft of the spindle. This allows to obtain particularly compact operating heads that can be manufactured in a simple and cost-effective manner.

Further features and embodiments of the head and of the machine tool according to the present invention will be described hereunder and indicated in the attached claims, which form an integral part of the present description.

### Brief description of the drawings

The invention shall be better understood by following the description and the accompanying drawing, which shows non-limiting practical embodiments of the invention. More in particular, in the drawing:
figures 1 and 2 show a front view of a four-spindle operating head according to the present invention in two distinct operating arrangements;
figures 1A and 2A show axonometric views of the head in arrangements corresponding to that of figures 1 and 2;
figures 3 and 4 show a second embodiment of a head according to the present invention, in two different operating positions;
figures 5 and 6 show a third embodiment of a head according to the present invention, in two different operating arrangements;
figures 7 and 8 show a fourth embodiment of the head according to the present invention;
figure 9 shows a head as in figure 2 provided with two pairs of mutually identical tools;
figure 10 schematically shows the parallel processing of two pieces with a head equipped as in figure 9;
figures 11 and 12 show a front view and a side view of a machine tool or working center with vertical column, provided with an operating head of the type illustrated in figures 1 and 2;
figures 13 and 14 show a gantry-type machine tool or working center equipped with an operating head of the type illustrated in figures 1 and 2;
figure 15 shows a front view of a gantry - type machine tool or working center similar to that of figures 13 and 14, equipped with a different arrangement of tools to perform, through an individual movement of the operating head, a double machining in sequence on a piece being processed; and
figure 16 shows a diagram for a better understanding of the machining operations which can be performed by means of the machine tool of figure 15.

### Detailed description of embodiments of the invention

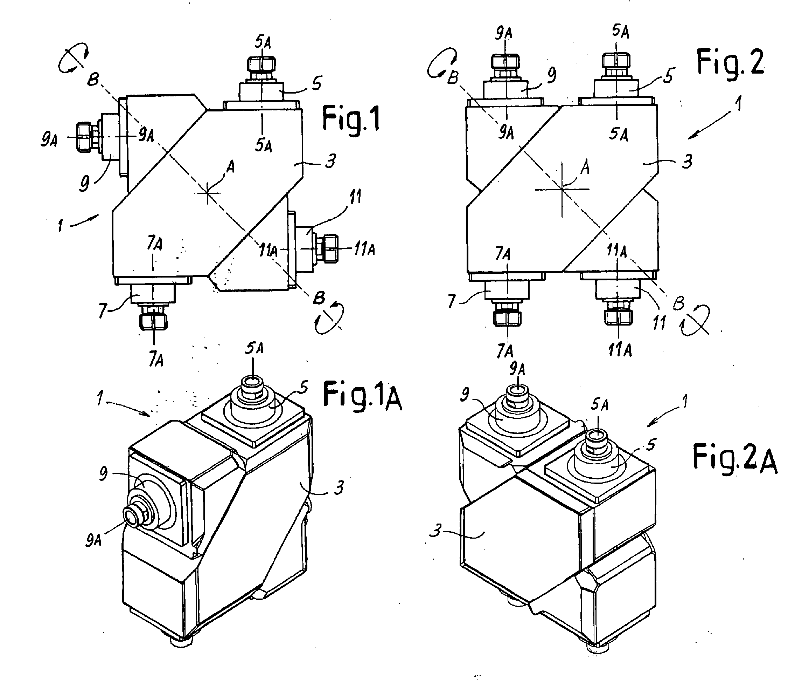

With initial reference to figures 1, 1A, 2, and 2A, a first embodiment of a multi-spindle head according to the present invention will be described below.

The head is indicated as a whole with number 1. It has a body 3, on which a first spindle 5 and a second spindle 7 are mounted. The spindles 5 and 7 are preferably electrospindles, i.e. spindles each of which is provided with a respective motor, typically in-line with the rotation axis of the spindle, so as to obtain a compact structure without the need of motion transmissions. In preferred embodiments the electrospindles are high-speed electrospindles, with an adjustable rotation speed, which can achieve for example values comprised between 18,000 and 24,000 rpm. Preferably, the electrospindles are so called HSC (High Speed Contouring) electrospindles. Reference number 5A-5A indicates the rotation axis of the electrospindle 5, and reference number 7A-7A indicates the rotation axis of the electrospindle 7. The two axes 5A-5A and 7A-7A are substantially parallel to each other, whilst the coupling for the tools to be mounted on the electrospindles 5, 7 are oriented in an opposite manner relative to the body 3 of the operating head 1. The letter A indicates a first numerically controlled rotation or oscillation axis of the operating head 1, extending orthogonally to the plane of figures 1 and 2. The head 1 can rotate or oscillate about the axis A under the control of an electronic program of the machine tool or working center onto which the head is installed. The electrospindles 5 and 7 are arranged in a symmetrical manner relative to the axis A.

Furthermore, on the body 3 a third electrospindle 9 and a fourth electrospindle 11 are mounted. These electrospindles 9 and 11 can be adjusted angularly by a 180°-rotation about a diagonal axis B-B of angular adjustment. In some embodiments the axis B-B intersects the numerically controlled axis A of rotation of the head 1.

As it can be observed by comparing the figures 1 and 2 and figures 1A and 2A, each of the electrospindles 9 and 11 can rotate about the common axis B-B of angular adjustment, in order to take up two different angular positions with respect to the body 3 of the operating head 1. In figures 1, 1A, the axes of rotation 9A-9A and 11A-11A of the electrospindles 9 and 11 are parallel or substantially parallel to each other and are 90° oriented, i.e. they are substantially orthogonal relative to the axes 5A-5A and 7A-7A of the electrospindles 5 and 7, respectively. Consequently, in the arrangement shown in figure 1 and 1A, the rotation axes of the tools mounted on the electrospindles 5, 7, 9, and 11 are oriented at 90° each relative to the other. The connections of the spindles 9 and 11 are mutually opposite relative to the body 3 of the operating head 1 similarly to what occurs for the electrospindles 5 and 7.

Vice versa, in the arrangement shown in figures 2, 2A the electrospindles 9 and 11 have been rotated about the axis B-B so as to assume such an arrangement that the axis 9A-9A of rotation of the electrospindle 9 is parallel to the axis 5A-5A of rotation of the electrospindle 5. Furthermore, the rotation axis 9A-9A of the electrospindle 9 coincides with the rotation axis 7A-7A of the spindle or electrospindle 7 and, similarly, the rotation axis 11A-11A of the electrospindle 11 is parallel to the rotation axis 7A-7A of the electrospindle 7 and coincides with the axis 5A-5A of the electrospindle 5.

In conclusion, in the arrangement of figures 2, 2A the electrospindles 5, 9 are flanking and parallel to each other on a side of the body 3 of the operating head 1, whilst the electrospindles 7 and 11 are flanking each other with the rotation axes parallel and on the opposite face or side of the body 3 of the operating head 1.

It should be understood that the operating head of figures 1, 1A, 2, 2A can also take up two intermediate configurations, i.e.: a configuration in which the electrospindle 9 is in the position of figure 1 and the electrospindle 11 is in the position of figure 2; a further configuration in which the electrospindle 9 is in the position of figure 2 and the electrospindle 11 is in the position of figure 1.

It should be also understood that the rotation or angular adjustment of the electrospindles 9, 11 about a common diagonal axis B-B is a preferred configuration, but that the two spindles can also be rotated for the angular adjustment thereof about two axes, parallel but non-coinciding. Similarly, it should be understood that according to less advantageous modified embodiments, in the arrangement of figure 2 the axes 9A-9A and 7A-7A could be parallel but non-coinciding, and similarly the axes 5A-5A relative to the axes 11A-11A.

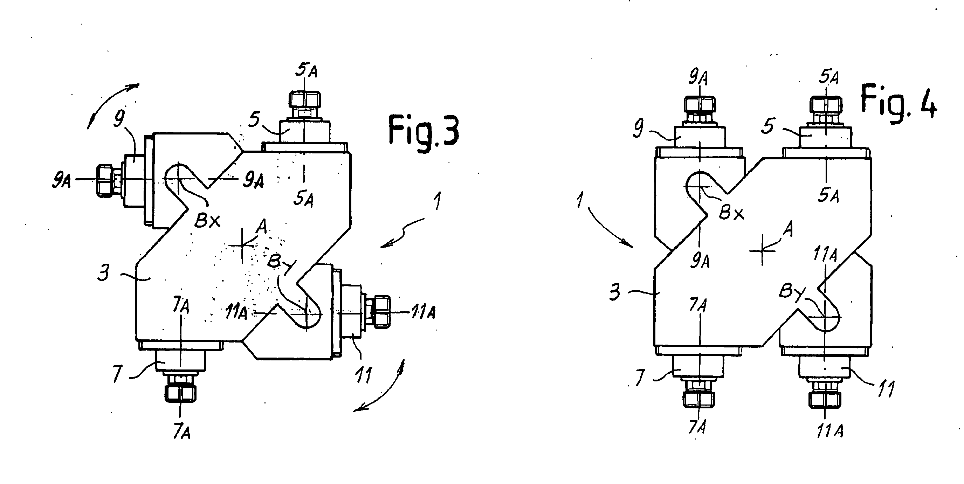

Figures 3 and 4 show a modified embodiment of the head shown in figures 1, 1A, 2, and 2A. The same numbers indicate the same or equivalent parts to those in the previous embodiment. The difference between the two embodiments consists in that in figures 3 and 4, that show two arrangements of the same operating head indicated with 1, in order to be adjusted the electrospindles 9 and 11 rotate angularly about two axes BX and BY parallel to the axis A, about which the head 1 as a whole rotates or oscillates. Apart from that, the head 1 of figures 3 and 4 is equivalent to that of the previous figures.

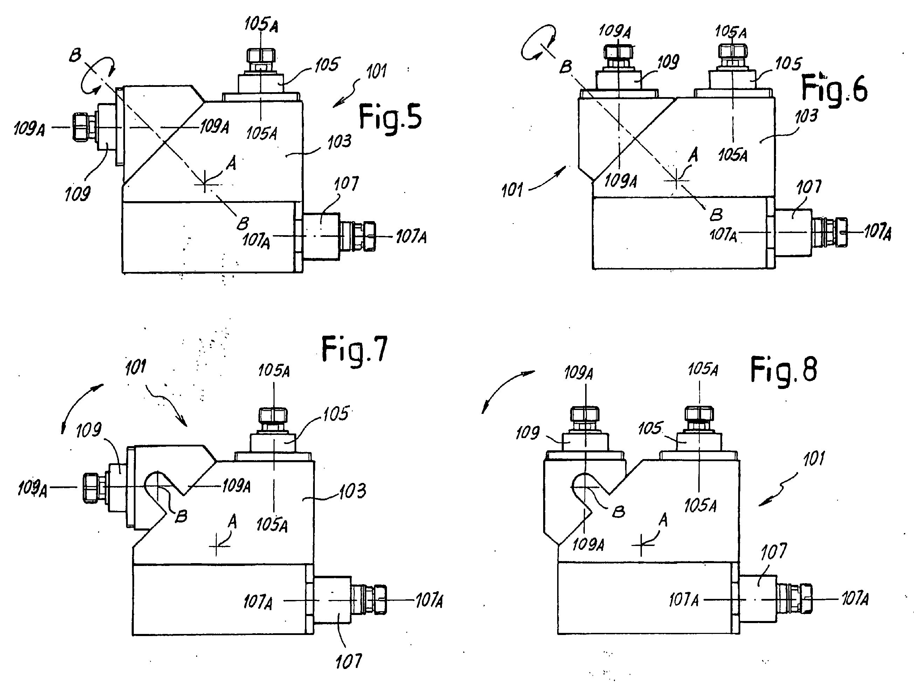

Figures 5 and 6 show an operating head 101 with a body 103 rotating about a numerically controlled rotation or oscillation axis A. Two electrospindles 105 and 107 are connected to the body 103; the rotation axes of these electrospindles are indicated with 105A-105A and 107A-107A. Said axes are substantially mutually orthogonal and they cannot be oriented. A third spindle 109 is connected on the same body 103 of the head 101; this spindle can be angularly oriented about an axis B-B so as to take up alternatively the angular position of figure 5 and that of figure 6. In the arrangement of figure 5, the rotation axis 109A-109A of the electrospindle 109 is parallel to the axis 107A-107A and the two electrospindles 109, 107 are arranged mutually opposite relative to the body 103 of the head 101. Vice versa, in the arrangement of figure 6 the rotation axis 109A-109A of the electrospindle 109 is parallel to the rotation axis 105A-105A of the electrospindle 105.

Figures 7 and 8 show a modified embodiment of the head of figures 5 and 6. The same numbers indicate parts identical or equivalent to those in figures 5 and 6. The difference between the two embodiments of figures 5, 6, and 7, 8 consists in that in the second case the electrospindle 109 can be adjusted in one or in the other of the two angular positions of figures 7 and 8 by means of a movement about an axis B, parallel to the axis A and therefore orthogonal to the plane of the figures.

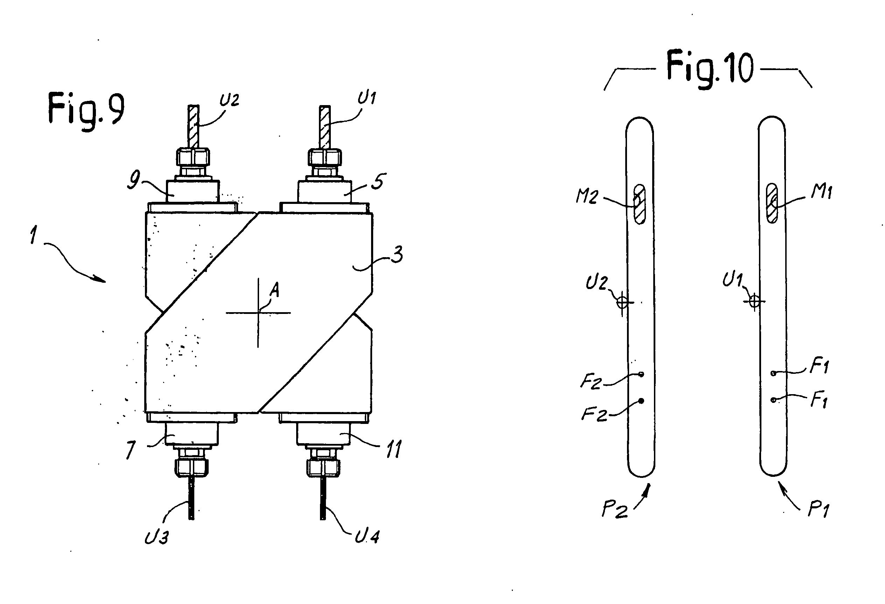

By way of example, figure 9 shows a head 1 equivalent to that illustrated in figures 1, 1A, 2, 2A, equipped with a first pair of tools U1, U2 mounted on the electrospindles 5 and 9 oriented in the position indicated in figures 2, 2A. Vice versa, tools U3 and U4, mutually identical and different from the tools U1, U2 are mounted on the electrospindles 7 and 11. Through the so equipped head, the parallel processing of two mutually identical pieces is possible, that are indicated with P1 and P2 in figure 10. In said figure also the tools U1 and U2 are represented in a working position, which are used for example to perform contouring of the two pieces P1, P2 simultaneously. On the two pieces P1, P2, two mortises M1, M2 are also indicated, which can be obtained simultaneously again by using two tools for example the same tools U1, U2. Furthermore, two pairs of holes F1, F1 and F2, F2 respectively on the pieces P1 and P2 are indicated. These holes can be obtained in pairs, that means that a first hole F1 can be obtained contemporaneously with a first hole F2, for example by means of the tools U4 and U3.

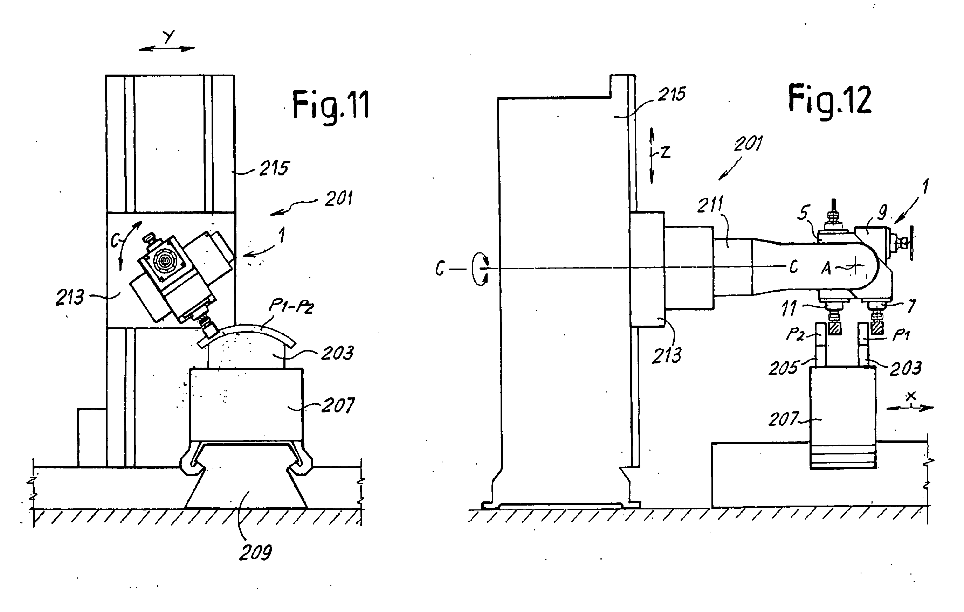

In figures 11 and 12 a column-type machine tool 201A is shown, on which an operating head 1 is installed, provided with respective tools, to perform various machining operations. P1 and P2 indicate two identical pieces being simultaneously processed, mounted on holding chucks 203, 205. The holding chucks 203, 205 are mounted on a carriage 207 slidable on a guide 209 according to arrow X. The head 1 is mounted on an arm 211 carried by a slide 213 slidable according to arrow Z along the column 215. This latter can move for example according to the arrow Y (figure 11). The axes X, Y, Z constitute three numerically controlled translation axes of the machine tool or working center 201.

The head 1 is a bi-rotary head, i.e. a head with a movement of oscillation or rotation about a first numerically controlled axis A and about a second numerically controlled axis C, which are preferably orthogonal to each other. As it is shown in particular in figure 12, by means of a first pair of mutually identical tools supported by the electrospindle 7 and by the electrospindle 11, pieces P1, P2 can be processed simultaneously. On the other two electrospindles, two tools of different type are mounted, which can perform separately on the one or on the other of the two pieces P1, P2 a different type of machining. In this case, the spindles or electrospindles are arranged in a position intermediate between that of figures 1 and 2, i.e. with the rotation axes of the electrospindles 7, 11 mutually parallel and the axes of the electrospindles 5, 9 orthogonal to each other.

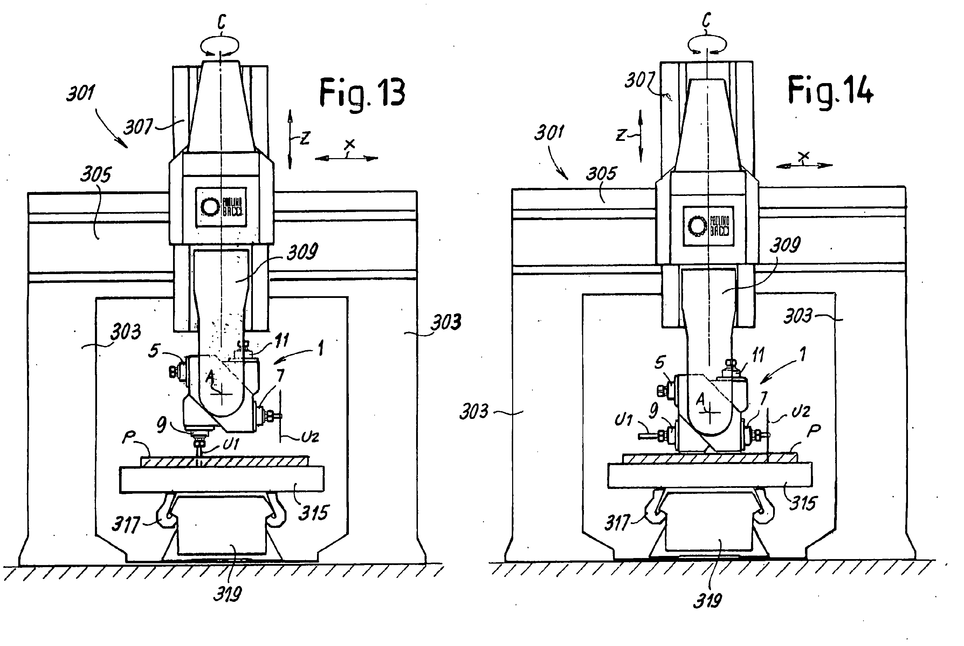

Figures 13 and 14 show the use of an operating head of the type shown in figures 1, 1A, 2, 2A on a gantry-type machine tool or working center 301. The machine 301 comprises two uprights 303 and a crossbeam 305 on which a slide 307, carrying the head 1, slides according to a direction X. The head 1 is carried by an arm 309 supported by the slide 307 and movable relative to the latter according to double arrow Z. The letter C indicates a numerically controlled rotation or oscillation axis of the arm 309 and therefore of the head 1 supported by it. The letter A indicates the second numerically controlled rotation or oscillation axis of the head 1, orthogonal to the axis C.

U1 and U2 indicate two tools mounted on the electrospindles 9 and 7 of the head 1, whilst in the particular configuration shown in figures 13 and 14 the electrospindles 5 and 11 are devoid of tools, but they could also be provided with tools identical to or different from the tools U1, U2. The arrangement of the head 1 is that illustrated in figures 1, 1A, i.e. an arrangement with the rotation axes of the electrospindles 5, 7, 9, 11 orthogonal to each other.

In figure 13, the head is in position to make the tool U1 work on a piece P, for example to perform a drilling. The tool U2 can be a disk-shaped blade with high radial dimension. The possibility of rotating angularly and of positioning the electrospindle 9 relative to the body 3 of the head allows to place the tool U1 relative to the tool U2 in such a manner that the second tool does not interfere with the piece P during the use of the first tool, without the need of changing the position of the piece P relative to the holding chuck 315. This latter is movable by means of a slide 317 along a base 319, which develops orthogonally to the crossbeam 305 of the gantry and below it.

Figure 14 shows the same machine tool 301 in the position of the head 1 for machining the piece P by means of the disk-shaped blade U2. The blade can start machining simply by rotating the electrospindle 9 relative to the position taken up in figure 13, avoiding the interference of the tool U1 with the piece whilst the tool U2 is working.

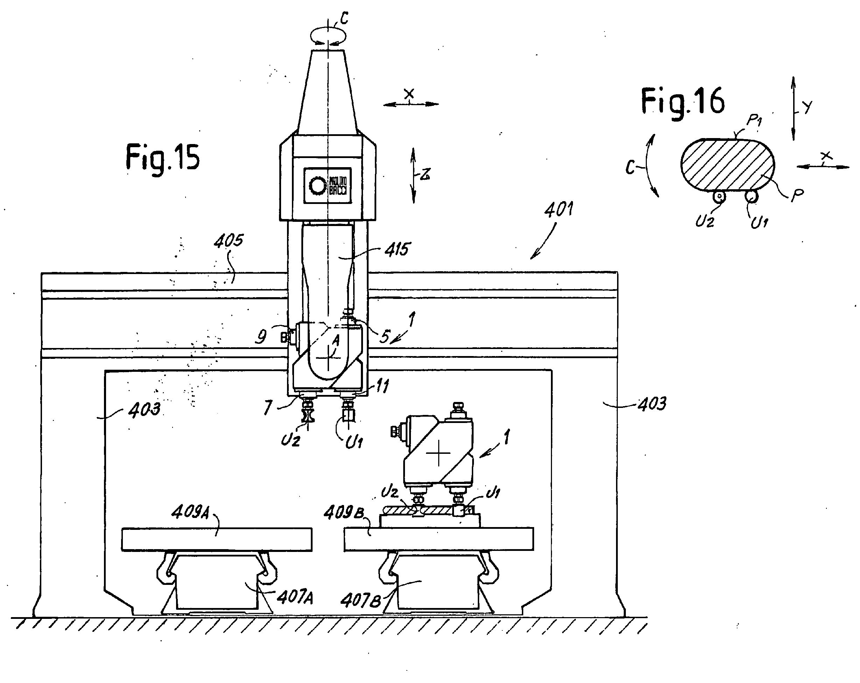

Figure 15 shows a gantry-type machine tool or working center 401 similar to the machine 301, but with a wider gantry, i.e. with a longer crossbeam 405, always carried on two uprights 403. Below the crossbeam 405 two bases 407A, 407B develop for two workpiece-holding tables 409A, 409B, which can work in pendular cycle, i.e. they can move alternatively to a working position and to a position of loading and unloading the pieces. The letter P indicates a piece being processed on the table 409B. The head is again indicated with the number 1, and is carried by a bi-rotary arm 415 equivalent to the arm 309 of figures 13 and 14.

Z and X indicate the numerically controlled translation axes of the head 1 relative to the bearing structure, and C and A indicate the numerically controlled rotation axes of the head 1. U1 and U2 indicate two tools mounted on two electrospindles, for example the electrospindles 7 and 11, oriented with their rotation axes mutually parallel and parallel to the numerically controlled rotation axis C. As in the example of figures 13 and 14, also in figure 15 a numerically controlled translation axis Y is provided, orthogonal to the plane of the figure, along which the workpiece-holding tables 409A, 409B can translate when they slide along the bases 407A, 407B.

With an arrangement of this type, by moving the operating head 1 according to the axis X and about the axis C and by moving the piece P along the axis Y translating the holding chuck 409B on the base 407B, it is possible for example to perform contouring on the piece P, as schematically shown in figure 16. During this machining, the two tools U1 and U2 machine in sequence the perimeter P1, i.e. the edge P1 of the piece P along all the length thereof or anyway along a segment of this development. The movement is performed by maintaining the tools U1, U2 parallel to each other and constantly in contact with the edge of the piece P thanks to the combined movement about the numerically controlled axis C and along the axes X and Y of translation. The numerically controlled movements on the axes X and Y are represented by the respective arrows also in figure 16.

For example, the tools U1 and U2 can perform two subsequent machining operations, such as roughing performed by the tool U1 and finishing performed by the tool U2, or cylindrical milling and profiling. The set of the two tools U1, U2 is moved about the numerically controlled axis C and along the translation axis X, whilst the piece is moved along the numerically controlled axis Y and the tools U1, U2 rotate about the respective rotation axes, parallel to each other and to the numerically controlled rotation or oscillation axis C.

A similar machining would be possible by means of a column-type machine as that shown in figures 11 and 12, by providing the work holding table 207 with a vertical rotation axis.

According to a further aspect, the invention also concerns a method for machining a wood piece or the like along a profile, wherein along said profile at least two tools are moved in sequence relative to the piece being machined and perform two subsequent machining operations along the same profile, said two tools being carried by spindles with rotation axes substantially parallel to each other and supported by a common operating head, the head and the piece performing a reciprocal movement according to at least two numerically controlled translation axes defining a machining surface.

The method as defined above achieves the object of providing a machining cycle which can shorten the production times, is particularly simple and can be implemented even by means of operating heads having a simple structure.

In some embodiments, said method provides that said head and the piece perform a reciprocal movement also according to at least one numerically controlled rotation axis, substantially parallel to the axes of said spindles and substantially orthogonal to said machining surface. In some embodiments of said machining method, the profile lies in a plane substantially orthogonal to the axes of the spindles. The tools operating in sequence on the workpiece can be equal to one another or can be different from each other.

According to yet another aspect, the invention also concerns a machine tool for implementing a method as defined above, comprising a support for the pieces to be processed and an operating head with at least one pair of spindles having rotation axes, which can be arranged substantially parallel to each other, suitable to receive corresponding tools, and wherein said head and said support are movable one relative to the other according to at least two numerically controlled translation axes, substantially orthogonal to the rotation axes of said spindles, and about at least one numerically controlled rotation axis substantially parallel to the rotation axes of said spindles. In some embodiments the translation axes define a substantially horizontal machining surface. In some embodiments the machine tool can include a second numerically controlled rotation axis. Different embodiments can also include a third numerically controlled translation axis.

According to yet another aspect, the invention concerns to a multi-spindle operating head, with a numerically controlled rotation axis and at least one pair of spindles for respective tools suitable to rotate around axes substantially parallel to each other and the numerically controlled axis of rotation of said head. Said head can have variable geometry, to modify the reciprocal position of said at least two spindles.

It is understood that the drawing only shows an example provided by way of a practical arrangement of the present invention, which can vary in forms and arrangements without however departing from the scope of the concept underlying the invention as defined by the appended claim. Any reference numbers in the appended claims are provided for the sole purpose of facilitating reading of the claims in the light of the description and the drawing, and do not in any manner limit the scope of protection represented by the claims.

## Claims

1. Multi-spindle operating head (1:101) comprising a body (3; 103) and at least two tool spindles (5, 9; 7, 11; 105, 109) carried by said body (3), **characterized In that** at least one (9; 11; 109) of said spindles can be oriented relative to said body (3; 103) around an axis of angular adjustment (B-B), in order to assume at least two alternative orientations, with the rotation axis (9A-9A; 11A-11A; 109A-109A) of said at least one spindle respectively substantially orthogonal and substantially parallel to the rotation axis (5A-5A; 7A-7A; 105A-105A) of the other spindle, and **in that** it further comprises a numerically controlled rotation axis (A), the body (3; 103) being able to rotate or oscillate around said rotation axis (A).

2. The operating head as claimed in claim 1, wherein said spindles (5, 7, 9, 11; 105, 107, 109) are high speed electrospindles, each of which provided with its own electric motor that controls the rotation of the respective axis.

3. The operating head as claimed in claim 1 or 2, wherein said spindles have rotation speeds independent from each other.

4. The operating head as claimed in claim 1, or 2, or 3, comprising three spindles (105, 107. 109).

5. The operating head as claimed in claim 4, wherein two of said spindles (105, 107) have a fixed orientation relative to the body (103) and a third (109) of said spindles can be oriented in at least two alternative positions, In the first position said third spindle (109) being arranged with the rotation axis thereof (109A-109A) orthogonal to the rotation axis (105A-105A) of one of said fixed spindles (105, 107), and in the second position said third spindle (109) being arranged adjacent to said one of said fixed spindles and with the rotation axis (109A-109A) parallel to the rotation axis of (105A-105A) of said one of said fixed spindles.

6. The operating head as claimed in claim 5, wherein said two spindles (105, 107) with fixed orientation have rotation axes (105A-105A, 107A-107A) substantially orthogonal to each other.

7. The operating head as claimed in claim 1, or 2, or 3, comprising four spindles (5, 7, 9, 11), whose rotation axes (5A-5A, 7A-7A, 9A-9A, 11A-11A) can take up reciprocal positions oriented substantially orthogonal to each other, at least one of said spindles being movable angularly so as to take up an arrangement in which it is adjacent to and with its own rotation axis substantially parallel to the rotation axis of another of said four spindles.

8. The operating head as claimed in claim 7, wherein two of said spindles (9, 11) can be angularly oriented so as to place the respective rotation axis (9A-9A: 11A-11A) in a position nearly orthogonal and, alternatively, nearly parallel to and flanking the rotation axis (5A-5A, 7A-7A) of an adjacent spindle (5, 7).

9. The operating head as maimed in claim 8, wherein the rotation axis (5A-5A, 7A-7A) of two of said spindles (5, 7) are fixed relative to said head (3).

10. The operating head as claimed in claim 8 or 9, wherein said two spindles (9, 11), which can be angularly oriented, rotate about a common axis (B-B) or around two parallel axes of angular adjustment.

11. The operating head as claimed in claim 10, wherein said common axis (B-B) of angular adjustment intersects said numerically controlled rotation axis (A-A).

12. The operating head as claimed in claim 7, 8, or 9, wherein said spindles (5, 7, 9, 11) can be arranged in a first position with their rotation axes (5A-5A, 7A-7A, 9A-9A, 11A-11A) substantially orthogonal to each other, and in a second position, with their rotation axes (5A-5A, 7A-7A, 9A-9A, 11A-11A) parallel to each other and with pairs of spindles (6, 11; 7, 9) opposite to each other and with substantially coaxial rotation axes.

13. The operating head as claimed in one of the previous claims, wherein said numerically controlled rotation axis (A-A) is substantially orthogonal to a plane containing the rotation axes (5A-5A, 7A-7A, 9A-9A, 11A-11A; 105A-105A, 107A-107A, 109A-109A) of the spindles of said head.

14. The operating head as claimed in one of the previous claims, movable according to two numerically controlled oscillation or rotation axes (A-A, C-C) substantially orthogonal to each other.

15. The operating head as claimed in one of the previous claims, wherein said spindle or spindles, which can be oriented, can be positioned manually relative to the body of the head.

16. The operating head as claimed in one of the previous claims, wherein said at least one spindle that can be oriented relative to said body can be adjusted angularly by a 180°-rotation about an axis (B-B) of angular adjustment.

17. A machine tool comprising a multi-spindle operating head as claimed in one of the previous claims.

18. The machine tool as claimed in claim 17, wherein said operating head is carried by a column or by a gantry.

## Patentansprüche

1. Mehrspindelbearbeitungskopf (1; 101), der einen Körper (3; 103) und mindestens zwei Werkzeugspindeln (5, 9; 7, 11; 105, 109), die von dem Körper (3) getragen werden, umfasst, **dadurch gekennzeichnet, dass** mindestens eine (9; 11; 109) der Spindeln relativ zu dem Körper (3; 103) um eine Winkeleinstellungsachse (B-B) orientiert werden kann, um mindestens zwei alternative Orientierungen anzunehmen, wobei die Drehachse (9A-9A; 11A-11A; 109A-109A) der mindestens einen Spindel jeweils im wesentlichen orthogonal und im wesentlichen parallel zu der Drehachse (5A-5A, 7A-7A; 105A-105A) der anderen Spindel ist, und dass er weiter eine numerisch gesteuerte Drehachse (A) umfasst, wobei der Körper (3; 103) fähig ist, um die Drehachse (A) zu rotieren oder oszillieren.

2. Bearbeitungskopf gemäß Anspruch 1, wobei die Spindeln (5, 7, 9, 11; 105, 107, 109) Hochgeschwindigkeltselektrospindeln sind, von denen jede mit ihrem eigenen Elektromotor versehen ist, der die Rotation der jeweiligen Achse steuert.

3. Bear-beitungskopf gemäß Anspruch 1 oder 2, wobei die Spindeln voneinander unabhängig Rotationsgeschwindigkeiten aufweisen.

4. Bearbeltungskopf gemäß Anspruch 1 oder 2 oder 3, der drei Spindeln (105, 107, 109) umfasst.

5. Bearbeitungskopf gemäß Anspruch 4, wobei zwei der Spindeln (105, 107) eine feste Orientierung relativ zu dem Körper (103) aufweisen und eine dritte (109) der Spindeln in mindestens zwei alternativen Positionen orientiert sein kann, wobei die dritte Spindel (109) in der ersten Position mit ihrer Rotationsachse (109A-109A) orthogonal zu der Rotationsachse (105A-105A) einer der festen Spindeln (105, 107) angeordnet ist und die dritte Spindel (109) in der zweiten Position angrenzend an eine der festen Spindeln und mit der Drehachse (109A-109A) parallel zu der Drehachse (105A-10EA) der einen der festen Spindeln angeordnet ist.

6. Bearbeitungskopf gemäß Anspruch 5, wobei die zwei Spindeln (105, 107) mit fester Orientierung Drehachsen (105A-105A, 107A-107A) aufweisen, die Im wesentlichen orthogonal zueinander sind.

7. Bearbeitungskopf gemäß Anspruch 1 oder 2 oder 3, der vier Spindeln (5, 7, 9, 11) umfasst, deren Drehachsen (5A-5A, 7A-7A, 9A-9A, 11A-11A) reziproke Positionen einnehmen können, die im wesentlichen orthogonal zueinander orientiert sind, wobei mindestens eine der Spindeln angulär beweglich ist, so dass sie eine Anordnung einnimmt, in der sie angrenzend an und mit ihrer eigenen Drehachse im wesentlichen parallel zu der Drehachse einer anderen der vier Spindeln ist.

8. Bearbeltungskopf gemäß Anspruch 7, wobei zwei der Spindeln (9, 11) so anguiär orientiert sein können, dass sie die jeweilige Drehachse (9A-9A; 11A-11A) in einer Position anordnen, die annähernd orthogonal und, alternativ, annähernd parallel zu und angrenzend an die Drehachse (5A-5A, 7A-7A) einer angrenzenden Spindel (5, 7) ist.

9. Bearbeitungskopf gemäß Anspruch 8, wobei die Drehachse (5A-5A, 7A-7A) von zwei der Spindeln (5, 7) bezogen auf den Kopf (3) fest sind.

10. Bearbeitungskopf gemäß Anspruch 8 oder 9, wobei die zwei Spindeln (9, 11), die angulär orientiert werden könnten, um eine gemeinsame Achse (B-B) oder um zwei parallele Achsen der Winkeleinstellung rotieren.

11. Bearbeitungskopf gemäß Anspruch 10, wobei die gemeinsame Achse (B-B) der winkeleinstellung die numerisch gesteuerte Drehachse (A-A) schneidet.

12. Bearbeitungskopf gemäß Anspruch 7, 8 oder 9, wobei die Spindeln (5, 7, 9, 11) in einer ersten Position, mit ihren Drehachsen (5A-5A, 7A-7A, 9A-9A, 11A-11A) im wesentlichen orthogonal zueinander, und in einer zweiten Position, mit ihren Drehachsen (5A-5A, 7A-7A, 9A-9A, 11A-11A) parallel zueinander und mit Paaren von Spindeln (5,11; 7, 9) entgegengesetzt zueinander und mit im wesentlichen koaxialen Drehachsen, angeordnet werden können.

13. Bearbeitungskopf gemäß einem der vorhergehenden Ansprüche, wobei die numerisch gesteuerte Drehachse (A-A) im wesentlichen orthogonal zu einer Ebene ist, welche die Drehachse (5A-5A, 7A-7A, 9A-9A, 11A-11A; 105A-105A, 107A-107A, 109A-109A) der Spindeln des Kopfes enthält,

14. Bearbeitungskopf gemäß einem der vorhergehenden Ansprüche, der gemäß zwei numerisch gesteuerten Oszillation"- oder Drehachsen (A-A, C-C), die im wesentlichen orthogonal zueinander sind, beweglich ist,

15. Bearbeitungskopf gemäß einem der vorhergehenden Ansprüche, wobei die Spindel oder Spindeln, die orientiert werden kann/können, manuell relativ zu dem Körper des Kopfes positioniert werden kann/können.

16. Bearbeitungskopf gemäß einem der vorhergehenden Ansprüche, wobei die mindestens eine Spindel, die relativ zu dem Körper orientiert werden kann, angulär durch eine 180°-Drehung um eine Achse (B-B) der Winkeleinstellung eingestellt werden kann.

17. Werkzeugmaschine, die einen Mehrspindelbearbeitungskopf gemäß einem der vorhergehenden Ansprüche umfasst.

18. Werkzeugmaschine gemäß Anspruch 17, wobei der Bearbeitungskopf durch eine Säule oder ein Portal getragen wird.

## Revendications

1. Tête d'actionnement à plusieurs broches (1 ; 101), comprenant un corps (3 ; 103) et au moins deux broches d'outil (5, 9 ; 7,11 ; 105, 109) portées par ledit corps (3), **caractérisée en ce que** l'une au moins (9 ; 11 ; 109) desdites broches peut être orientée par rapport audit corps (3 ; 103) autour d'un axe de réglage angulaire (B - B), de façon à prendre au moins deux orientations alternatives, l'axe de rotation (9A - 9A ; 11A-11A, 109A - 109A) de l'une au moins desdites broches étant, respectivement, sensiblement orthogonal et sensiblement parallèle à l'axe de rotation (5A - 5A ; 7A - 7A ; 105A - 105A) de l'autre broche, et **en ce qu'**elle comprend en outre un axe de rotation (A) commandé de manière numérique, le corps (3 ; 103) pouvant tourner ou osciller autour dudit axe de rotation (A).

2. Tête d'actionnement selon la revendication 1, dans laquelle lesdites broches (5, 7, 9, 11 ; 105, 107, 109) sont des électrobroches à grande vitesse, chacune d'elles étant dotée de son propre moteur électrique qui commande la rotation de l'axe respectif.

3. Tête d'actionnement selon la revendication 1 ou la revendication 2, dans laquelle lesdites broches présentent des vitesses de rotation qui sont indépendantes les unes des autres.

4. Tête d'actionnement selon l'une quelconque des revendications 1 à 3, comprenant trois broches (105, 107. 109).

5. Tête d'actionnement selon la revendication 4, dans laquelle deux desdites broches (105, 107) présentent une orientation fixe par rapport au corps (103) et une troisième (109) desdites broches peut être orientée dans deux positions alternatives au moins ; dans la première position ladite troisième broche (109) étant agencée de telle sorte que son axe de rotation (109A -109A) soit orthogonal à l'axe de rotation (105A - 105A) de l'une desdites broches fixes (105, 107) ; et dans la seconde position, ladite troisième broche (109) étant agencée adjacente à l'une desdites broches fixes, son axe de rotation (109A - 109A) étant parallèle à l'axe de rotation (105A- 105A) de l'une desdites broches fixes.

6. Tête d'actionnement selon la revendication 5, dans laquelle lesdites deux broches (105, 107) qui présentent une orientation fixe, ont des axes de rotation (105A - 105A, 107A - 107A) sensiblement orthogonaux l'un par rapport à l'autre.

7. Tête d'actionnement selon l'une quelconque des revendications 1 à 3, comprenant quatre broches (5, 7, 9, 11), dont les axes de rotation (5A - 5A, 7A - 7A, 9A - 9A, 11A - 11A) peuvent prendre des positions réciproques orientées sensiblement orthogonales entre elles, l'une au moins desdites broches étant mobile de manière angulaire de façon à prendre un agencement dans lequel elle est adjacente à celles-ci, son propre axe de rotation étant sensiblement parallèle à l'axe de rotation d'une autre desdites quatre broches.

8. Tête d'actionnement selon la revendication 7, dans laquelle deux desdites broches (9, 11) peuvent ëtre orientées de manière angulaire de façon à placer l'axe de rotation respectif (9A - 9A; 11A - 11A) dans une position presque orthogonale et, en variante, presque parallèle à l'axe de rotation (5A - 5A, 7A - 7A) d'une broche adjacente (5, 7) et à côté de celui-ci.

9. Tête d'actionnement selon la revendication 8, dans laquelle l'axe de rotation (5A - 5A. 7A - 7A) de deux desdites broches (5, 7) est fixe par rapport à ladite tête (3).

10. Tête d'actionnement selon la revendication 8 ou la revendication 9, dans laquelle lesdites deux broches (9, 11), qui peuvent être orientées de manière angulaire, tournent autour d'un axe commun (B - B) ou autour de deux axes de réglage angulaire parallèles.

11. Tête d'actionnement selon la revendication 10, dans laquelle ledit axe de réglage angulaire commun (B - B) coupe ledit axe de rotation commandé de manière numérique (A - A).

12. Tête d'actionnement selon l'une quelconque des revendications 7 à 9, dans laquelle lesdites broches (5, 7, 9, 11) peuvent être agencées dans une première position de telle sorte que leurs axes de rotation (5A - 5A, 7A - 7A, 9A - 9A, 11A - 11A) soient sensiblement orthogonaux les uns par rapport aux autres, et dans une seconde position, de telle sorte que leurs axes de rotation (5A - SA, 7A - 7A, 9A - 9A, 11A - 11A) soient parallèles les uns aux autres, les paires de broches (5, 11 ; 7, 9) étant opposées les unes aux autres et les axes de rotation étant sensiblement coaxiaux.

13. Tête d'actionnement selon l'une quelconque des revendications précédentes, dans laquelle ledit axe de rotation commandé de manière numérique (A - A) est sensiblement orthogonal à un plan qui contient les axes de rotation (5A - 5A, 7A - 7A, 9A - 9A, 11A - 11A ; 105A - 105A, 107A - 107A, 109A - 109A) des broches de ladite tête.

14. Tête d'actionnement selon l'une quelconque des revendications précédentes, mobile selon deux axes d'oscillation ou de rotation commandés de manière numérique (A - A, C - C) sensiblement orthogonaux l'un par rapport à l'autre.

15. Tête d'actionnement selon l'une quelconque des revendications précédentes, dans laquelle ladite broche ou lesdites broches, qui peuvent être orientées, peuvent être positionnées de manière manuelle par rapport au corps de la tête.

16. Tête d'actionnement selon l'une quelconque des revendications précédentes, dans laquelle ladite ou lesdites broches qui peut être orientées par rapport audit corps, peuvent être réglées de manière angulaire selon une rotation de 180° autour d'un axe de réglage angulaire (B - B).

17. Machine-outil comprenant une tête d'actionnement à plusieurs broches selon l'une quelconque des revendications précédentes.

18. Machine-outil selon la revendication 17, dans laquelle ladite tête d'actionnement est portée par une colonne ou par un portique.
